(19) Europäisches Patentamt
European Patent Office
Office européen des brevets

(11) **EP 4 231 758 B1**

(12) **EUROPEAN PATENT SPECIFICATION**

(45) Date of publication and mention
of the grant of the patent:
**24.06.2026 Bulletin 2026/26**

(21) Application number: **21896392.4**

(22) Date of filing: **03.08.2021**

(51) International Patent Classification (IPC):
$H04W\ 72/12^{(2023.01)}$     $H04L\ 5/00^{(2006.01)}$
$H04B\ 7/0452^{(2017.01)}$

(52) Cooperative Patent Classification (CPC):
**H04W 72/121; H04B 7/04013; H04B 7/0452;
H04L 5/0037; H04L 5/0048**

(86) International application number:
**PCT/CN2021/110264**

(87) International publication number:
**WO 2022/110885 (02.06.2022 Gazette 2022/22)**

(54) **MULTI-USER SCHEDULING METHOD, BASE STATION, AND RELATED APPARATUS**

MEHRBENUTZER-PLANUNGSVERFAHREN, BASISSTATION UND ZUGEHÖRIGE VORRICHTUNG

PROCÉDÉ DE PLANIFICATION MULTI-UTILISATEUR, STATION DE BASE ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2020 CN 202011335709**

(43) Date of publication of application:
**23.08.2023 Bulletin 2023/34**

(73) Proprietor: **Huawei Technologies Co., Ltd.
Shenzhen, Guangdong 518129 (CN)**

(72) Inventors:
• **XU, Wei**
  **Nanjing, Jiangsu 210096 (CN)**
• **HE, Zhenyao**
  **Nanjing, Jiangsu 210096 (CN)**
• **SUN, Huan**
  **Shenzhen, Guangdong 518129 (CN)**
• **BI, Xiaoyan**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
**EP-A1- 2 161 852      CN-A- 106 028 461
CN-A- 110 809 904      CN-A- 111 313 951
CN-A- 111 313 951      CN-A- 111 817 768**

• **WANG ZHAORUI; LIU LIANG; CUI SHUGUANG:
"Channel Estimation for Intelligent Reflecting
Surface Assisted Multiuser Communications:
Framework, Algorithms, and Analysis", IEEE
TRANSACTIONS ON WIRELESS
COMMUNICATIONS, IEEE SERVICE CENTER,
PISCATAWAY, NJ., US, vol. 19, no. 10, 30 June
2020 (2020-06-30), US
, pages 6607 - 6620, XP011814041, ISSN:
1536-1276, DOI: 10.1109/TWC.2020.3004330**

## Description

Priority is claimed to Chinese Patent Application No. 202011335709.9, filed with the China National Intellectual Property Administration on November 24, 2020 and entitled "MULTI-USER SCHEDULING METHOD, BASE STATION, AND RELATED APPARATUS".

## TECHNICAL FIELD

This disclosure generally relates to the field of communication technologies, and the invention in particular relates to a multi-user scheduling method, performed by a base station, a base station, , a computer-readable storage medium, as well as a computer program product.

## BACKGROUND

An intelligent reflecting surface (intelligent reflecting surface, IRS) is usually composed of a large number of passive low-cost reflective elements with reconfigurable parameters, and may be used as an effective method to improve performance of a wireless communication system. With help of a smart controller, a wireless propagation channel is reconstructed by adjusting phases of all the reflective elements of the IRS. In this way, functions such as signal enhancement and interference cancellation may be implemented without increasing overhead of a transmitter.

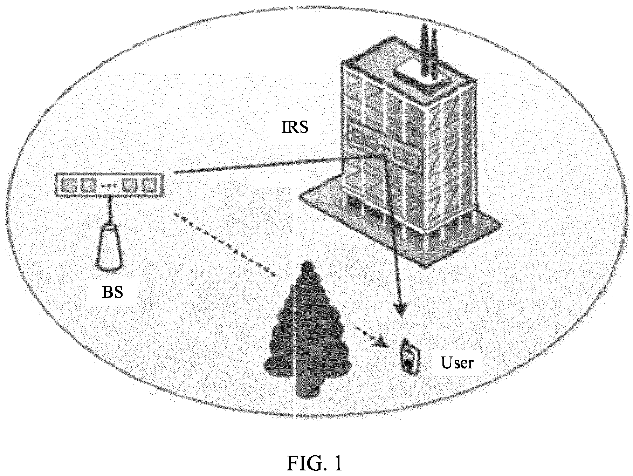

Specifically, as shown in FIG. 1, in some communication scenarios in which a channel is blocked or channel quality is poor, for example, a channel between a base station (base station, BS) and a user (user) in FIG. 1 is interfered by a tree, an IRS may be manually deployed to effectively increase a plurality of propagation paths, to improve quality of a wireless communication link. In addition, by changing a phase of a reflected signal, the IRS may implement a passive beamforming function, and implement energy focusing or energy zeroing at a required position. In addition to reducing costs and reducing energy consumption, the IRS is significant for improving system performance.

However, in an IRS-based multi-user multiple-input multiple-output (multi-user multiple-input multiple-output, MU-MIMO) system, as a quantity of users and a quantity of IRS units increase, overhead used for channel estimation is huge, and computational complexity of a multi-user selection scheduling algorithm is high, which result in a decrease in transmission efficiency.

EP 2 161 852 A1 discloses a method for scheduling uplink transmission in a relay-based wireless communication system. The method comprises: estimating step for estimating equivalent uplink channels of respective users whose uplink transmission is performed via a same relay station; calculating step for calculating orthogonality between the equivalent channels of said users; selecting step for selecting a combination of virtual multiple input multiple output users from said users, wherein the equivalent channels of the users in said combination of virtual multiple input multiple output users is conformable to the requirement of orthogonality; and scheduling step for scheduling the respective users in said combination of virtual multiple input multiple output users to perform uplink transmission cooperatively with a same time or frequency resource. By the disclosure, time or frequency resource can be effectively saved without apparently reducing system capacity when the system's radio resource is scarce, and a proper quality of the signal reception at the base station side is maintained.

CN 106028461 A discloses a relay cooperative distributed multi-user scheduling method under large-scale MIMO, used for mainly solving the problems that the optimal resource distribution cannot be obtained and the system performance is low in the prior art. The relay cooperative distributed multi-user scheduling method comprises the following steps that: (1), users obtain channel state information of downlinks by utilizing pilot signals; (2), the same number of users in a system can be randomly divided into one group; and one relay is distributed to each group; (3), the users send the channel state information to the relay in the group; and the relay screens out users having low channel correlation in the group, and feeds back the channel state information of the users having low channel correlation to a base station; (4), the base station obtains an optical sending user set through a semi-orthogonal algorithm; and (5), the base station sends beam forming signals to the selected users. According to the relay cooperative distributed multi-user scheduling method disclosed by the disclosure, the feedback information amount of the system can be effectively reduced; furthermore, too much influence on the resultant speed performance of the system cannot be caused; and thus, the relay cooperative distributed multi-user scheduling method can be used for a large-scale MIMO system.

## SUMMARY

The object of the present invention is to provide a multi-user scheduling method, performed by a base station, a base station, a computer-readable storage medium, as well as a computer program product, to reduce system pilot overhead and improve multi-user scheduling efficiency of a system. This object is solved by the attached independent claims and further embodiments and improvements of the invention are listed in the attached dependent claims in which the invention is defined. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

The invention provides a multi-user scheduling method wherein the method includes: classifying to-be-scheduled user equipments into uplink user group equipments and downlink user group equipments; indicating the uplink user group equipments to send a configuration pilot signal to an intelligent reflecting surface IRS; indicating the downlink user group equipments to receive the configuration pilot signal reflected through the IRS, so that the downlink user group equipments determine, based on the configuration pilot signal, channel orthogonality assessment information with each of the uplink user group equipments; obtaining the channel orthogonality assessment information, and determining, based on the channel orthogonality assessment information, at least one pair of target user equipments from the to-be-scheduled user equipments; and performing multi-user scheduling for data transmission on the at least one pair of target user equipments.

In a first step of this embodiment of this application, over-the-air computation of channel orthogonality is implemented based on IRS assistance, and a target user equipment set with better orthogonality and higher channel link strength is pre-selected from the to-be-scheduled user equipments based on channel orthogonality assessment information obtained by orthogonality measurement. In a second step, scheduling and data transmission only need to be performed on a user in a target user equipment group by using a classic method. The method greatly reduces system overhead and system computational complexity required for multi-user scheduling.

With reference to a first aspect, in an implementation of embodiments of this application, that the downlink user group equipments determine, based on the configuration pilot signal, channel orthogonality assessment information with each of the uplink user group equipments includes: The downlink user group equipments determine, based on the configuration pilot signal, a channel orthogonality assessment value with each of the uplink user group equipments.

The channel orthogonality assessment value may be specifically set based on an actual situation. This is not limited in this embodiment of this application. For example, although not claimed, a calculation formula of the channel orthogonality assessment value provided in embodiments of this application is:

$$g_{i,j} = \left| \boldsymbol{h}_{v_j} \ \boldsymbol{h}_{u_i}^{H} \right|.$$

$g_{i,j}$ is a channel orthogonality assessment value between a downlink user group equipment $v_j$ and an uplink user group equipment $u_i$, $\boldsymbol{h}_{v_j}$ is a channel vector of a downlink user group equipment $v_j$, and $\boldsymbol{h}_{u_i}^{H}$ is a conjugate transpose of a channel vector of an uplink user group equipment $u_i$.

With reference to a first aspect, in an implementation of embodiments of this application, after that the downlink user group equipments determine a channel orthogonality assessment value with each of the uplink user group equipments, the method further includes: The downlink user group equipments perform normalization processing on channel orthogonality assessment values to construct a channel orthogonality assessment vector.

The channel orthogonality assessment vector may be specifically set based on an actual requirement. This is not limited in this embodiment of this application. For example, although not claimed, the channel orthogonality assessment vector is:

$$\widehat{\boldsymbol{g}}_j = [\widehat{g}_{1,j}, \widehat{g}_{2,j}, \widehat{g}_{3,j}, ..., \widehat{g}_{I,j}].$$

$\hat{g}_j$ is the channel orthogonality assessment vector, $\widehat{g}_{1,j}$ is a normalized channel orthogonality assessment value between a downlink user group equipment $v_j$ and a first uplink user group equipment, $\widehat{g}_{2,j}$ is a normalized channel orthogonality assessment value between the downlink user group equipment $v_j$ and a second uplink user group equipment, $\widehat{g}_{3,j}$ is a normalized channel orthogonality assessment value between the downlink user group equipment $v_j$ and a third uplink user group equipment, and $\widehat{g}_{I,j}$ is a normalized channel orthogonality assessment value between the downlink user group equipment $v_j$ and an $I^{th}$ uplink user group equipment.

With reference to a first aspect, in an implementation of embodiments of this application, the obtaining the channel orthogonality assessment information, and determining, based on the channel orthogonality assessment information, at least one pair of target user equipments from the to-be-scheduled user equipments includes:

obtaining the channel orthogonality assessment value fed back by each of the downlink user group equipments; and selecting, from the to-be-scheduled user equipments, first K pairs of target user equipments with minimum channel orthogonality assessment values, where K is an integer greater than or equal to 1, and user equipments between the target user equipment pairs are not repeated. It may be understood that, that user equipments between the target user equipment pairs are not repeated means that same user equipments do not appear repeatedly between each pair of the target user equipments. For example, if a first pair of target user equipments includes a target user equipment A and a target user equipment B, the target user equipment A and the target user equipment B do not repeatedly appear in another target user equipment pair.

With reference to a first aspect, in an implementation of embodiments of this application, the selecting, from the to-be-scheduled user equipments, first K pairs of target user equipments with minimum channel orthogonality assessment values includes:

selecting, from the to-be-scheduled user equipments, an $n^{th}$ pair of target user equipments with a minimum channel orthogonality assessment value, where n is an integer greater than or equal to 1; deleting or shielding a channel orthogonality assessment value corresponding to two user equipments in the $n^{th}$ pair of target user equipments; and selecting, from remaining to-be-scheduled user equipments, an $(n+1)^{th}$ pair of target user equipments with a minimum channel orthogonality assessment value, where n+1 is less than or equal to K.

With reference to a first aspect, in an implementation of embodiments of this application, after the selecting, from the to-be-scheduled user equipments, first K pairs of target user equipments with minimum channel orthogonality assessment values, the method further includes:
selecting, from the K pairs of target user equipments, first J pairs of target user equipments with minimum channel orthogonality assessment values, where J is an integer greater than or equal to 1, and J is less than K.

With reference to a first aspect, in an implementation of embodiments of this application, although not claimed, the performing multi-user scheduling for data transmission on the at least one pair of target user equipments includes: performing multi-user channel estimation on user equipments in the at least one pair of target user equipments, and performing, according to a typical multi-user scheduling algorithm, multi-user scheduling for data transmission on the target user equipments.

With reference to a first aspect, in an implementation of embodiments of this application, the classifying to-be-scheduled user equipments into uplink user group equipments and downlink user group equipments includes:

sending a reference signal to the IRS by using a fixed beam, so that the to-be-scheduled user equipments receive the reference signal and report received signal strength corresponding to the reference signal; obtaining the received signal strength; sorting the to-be-scheduled user equipments based on the received signal strength and according to a rule for multi-user scheduling; and classifying, according to parity of sequence numbers or a preset rule, sorted to-be-scheduled user equipments into uplink user group equipments and downlink user group equipments.

With reference to a first aspect, in an implementation of embodiments of this application, after the classifying to-be-scheduled user equipments into uplink user group equipments and downlink user group equipments, and before the indicating the uplink user group equipments to send a configuration pilot signal to an intelligent reflecting surface IRS, the method further includes:

respectively sending configuration signaling required for uplink communication or downlink communication to the uplink user group equipments and the downlink user group equipments, where the configuration signaling includes user time-frequency resource configuration information, reference signal configuration information, and user feedback configuration information; and sending phase configuration signaling required for over-the-air computation to the IRS, where the phase configuration signaling indicates a phase configuration of an IRS array.

According to a second aspect in accordance with the invention, the ivnention provides a base station and a control apparatus. The control apparatus communicates with another part of the base station through a communication bus.

The control apparatus includes a memory, a processor, and a communication link.

The memory is configured to store instructions, the processor communicates with the memory through the communication link, and after the processor executes some instructions stored in the memory, the control apparatus enables the base station to implement the user scheduling method according to the first aspect.

According to a third aspect, where the third aspect and its implementations and options below are not claimed, an embodiment of this application provides a multi-user scheduling apparatus. The apparatus includes:

a processing module, configured to classify to-be-scheduled user equipments into uplink user group equipments and downlink user group equipments,
indicate the uplink user group equipments to send a configuration pilot signal to an intelligent reflecting surface IRS, and
indicate the downlink user group equipments to receive the configuration pilot signal reflected through the IRS, so that the downlink user group equipments determine, based on the configuration pilot signal, channel orthogonality assessment information with each of the uplink user group equipments; and
an obtaining module, configured to obtain the channel orthogonality assessment information, and determine, based on the channel orthogonality assessment information, at least one pair of target user equipments from the to-be-scheduled user equipments, where
the processing module is further configured to perform multi-user scheduling for data transmission on the at least one pair of target user equipments.

With reference to the third aspect, in an implementation of embodiments of this application, the obtaining module is further configured to obtain a channel orthogonality assessment value fed back by each of the downlink user group equipments; and
the processing module is configured to select, from the to-be-scheduled user equipments, first K pairs of target user equipments with minimum channel orthogonality assessment values, where K is an integer greater than or equal to 1, and user equipments between the target user equipment pairs are not repeated.

With reference to the third aspect, in an implementation of embodiments of this application, the processing module is configured to:

select, from the to-be-scheduled user equipments, an $n^{th}$ pair of target user equipments with a minimum channel orthogonality assessment value, where n is an integer greater than or equal to 1;
delete or shield a channel orthogonality assessment value corresponding to two user equipments in the $n^{th}$ pair of target user equipments; and
select, from remaining to-be-scheduled user equipments, an $(n+1)^{th}$ pair of target user equipments with a minimum channel orthogonality assessment value, where n+1 is less than or equal to K.

With reference to the third aspect, in an implementation of embodiments of this application, the processing module is configured to:
select, from the K pairs of target user equipments, first J pairs of target user equipments with minimum channel orthogonality assessment values, where J is an integer greater than or equal to 1, and J is less than K.

With reference to the third aspect, in an implementation of embodiments of this application, with reference to the third aspect, in an implementation of embodiments of this application, the processing module is configured to:
perform multi-user channel estimation on user equipments in the at least one pair of target user equipments, and perform, according to a typical multi-user scheduling algorithm, multi-user scheduling for data transmission on the target user equipments.

With reference to the third aspect, in an implementation of embodiments of this application, the processing module is further configured to send a reference signal to the IRS by using a fixed beam, so that the to-be-scheduled user equipment receives the reference signal and reports received signal strength corresponding to the reference signal;

the obtaining module is further configured to obtain the received signal strength;
the processing module is further configured to sort the to-be-scheduled user equipments based on the received signal strength and according to a rule for multi-user scheduling; and
the processing module is further configured to classify, according to parity of sequence numbers or a preset rule, sorted to-be-scheduled user equipments into uplink user group equipments and downlink user group equipments.

With reference to the third aspect, in an implementation of embodiments of this application, the processing module is further configured to:

respectively send configuration signaling required for uplink communication or downlink communication to the uplink user group equipments and the downlink user group equipments, where the configuration signaling includes user time-frequency resource configuration information, reference signal configuration information, and user feedback configuration information; and

send phase configuration signaling required for over-the-air computation to the IRS, where the phase configuration signaling indicates a phase configuration of an IRS array.

According to a fourth aspect, where the fourth aspect and its implementations and options below are not claimed, an embodiment of this application provides a method for assessing channel orthogonality. The method includes: receiving, (by downlink user group equipments), a configuration pilot signal sent by uplink user group equipments and reflected through an IRS; determining, based on the received configuration pilot signal, channel orthogonality assessment information with each of the uplink user group equipments; and reporting the channel orthogonality assessment information to a base station.

With reference to the fourth aspect, in an implementation of embodiments of this application, the determining, based on the configuration pilot signal, channel orthogonality assessment information with each of the uplink user group equipments includes: determining, based on the configuration pilot signal, a channel orthogonality assessment value with each of the uplink user group equipments.

With reference to the fourth aspect, in an implementation of embodiments of this application, after the determining, based on the received configuration pilot signal, a channel orthogonality assessment value with each of the uplink user group equipments, the method further includes: The downlink user group equipments perform normalization processing on channel orthogonality assessment values to construct a channel orthogonality assessment vector.

With reference to the fourth aspect, in an implementation of embodiments of this application, before the receiving a configuration pilot signal sent by uplink user group equipments and reflected through an IRS, the method further includes:

receiving configuration signaling and configuration information of the uplink user group equipments that are sent by the base station, where the configuration signaling includes user time-frequency resource configuration information, reference signal configuration information, and user feedback configuration information.

According to a fifth aspect, where the fifth aspect and its implementations and options below are not claimed an embodiment of this application provides a user equipment. The user equipment includes at least one processor, a memory, and a wireless network interface.

The memory is a transient storage memory or a persistent storage memory, the user equipment communicates with a base station or another user equipment through the wireless network interface, and the processor is configured to communicate with the memory, and execute, on the user equipment, an instruction operation in the memory to perform the method according to the fourth aspect.

According to a sixth aspect, where the sixth aspect and its implementations and options below are not claimed, an embodiment of this application provides an apparatus for assessing channel orthogonality. The apparatus includes: a receiving module, configured to receive a configuration pilot signal sent by uplink user group equipments and reflected through an IRS; a processing module, configured to determine, based on the received configuration pilot signal, channel orthogonality assessment information with each of the uplink user group equipments; and a sending module, configured to report the channel orthogonality assessment information to a base station.

With reference to the sixth aspect, in an implementation of embodiments of this application, the processing module is configured to:

determine, based on the received configuration pilot signal, a channel orthogonality assessment value with each of the uplink user group equipments.

With reference to the sixth aspect, in an implementation of embodiments of this application, the processing module is configured to:

perform, by the downlink user group equipments, normalization processing on channel orthogonality assessment values to construct a channel orthogonality assessment vector.

With reference to the sixth aspect, in an implementation of embodiments of this application, the receiving module is further configured to:

receive configuration signaling and configuration information of the uplink user group equipments that are sent by the base station, where the configuration signaling includes user time-frequency resource configuration information, reference signal configuration information, and user feedback configuration information.

According to a seventh aspect according to the invention, the invention further provides a computer-readable storage medium. The computer-readable storage medium includes instructions. When the instructions are run on a computer or a processor, the computer or the processor is enabled to perform the method according to the first aspect or the fourth aspect.

According to an eighth aspect according to the invention, the invention further provides a computer program product including instructions. The computer program product includes program instructions. When the program instructions are run on a computer or a processor, the computer or the processor is enabled to perform the method according to the first aspect or the fourth aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

## BRIEF DESCRIPTION OF DRAWINGS

FIG. 1 is a schematic diagram of an intelligent reflecting surface;
FIG. 2 is a schematic diagram of an application scenario according to an embodiment of this application;
FIG. 3 is a flowchart of a user scheduling method according to an embodiment of this application;
FIG. 4 is a schematic diagram of over-the-air computation of channel orthogonality according to an embodiment of this application;
FIG. 5 is a flowchart performed by a downlink user group equipment according to an embodiment of this application;
FIG. 6 is a schematic diagram of a detailed technical solution according to an embodiment of this application;
FIG. 7 is a diagram of performance gain of a simulation test according to an embodiment of this application;
FIG. 8 is a schematic diagram of a user scheduling apparatus according to an embodiment of this application;
FIG. 9 is a schematic diagram of an access network device according to an embodiment of this application;
FIG. 10 is a schematic diagram of an apparatus for assessing channel orthogonality according to an embodiment of this application; and
FIG. 11 is a schematic diagram of a user equipment according to an embodiment of this application.

## DESCRIPTION OF EMBODIMENTS

Embodiments of this application provide a multi-user scheduling method, a base station, and a related apparatus, to reduce system pilot overhead and improve multi-user scheduling efficiency of a system.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. Moreover, the terms "include", "correspond to" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

In addition, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

For clear and brief description of the following embodiments, a related technology is briefly described first.

To resolve a problem of multi-user scheduling of a MU-MIMO system, a user scheduling solution based on a semi-orthogonal criterion is commonly used. In this solution, a base station needs to estimate precise channel state information of all users, and perform calculation based on the channel state information and the semi-orthogonal criterion to select a user with good channel orthogonality for multi-user communication. Specifically, after initialization, a user with a maximum channel vector modulus is first selected from a candidate user set as a reference user. Then, an orthographic projection of another user channel in the candidate user set about a channel of the reference user is calculated, and a user with a maximum projection vector modulus is selected as a new reference user. Finally, the candidate user set is updated based on channel orthogonality strength with the new reference user, and a user with strong channel orthogonality is reserved. The foregoing process is repeated to obtain a sufficient quantity of reference users to complete scheduling.

In the conventional technology, the precise channel state information of all users needs to be obtained for subsequent calculation. In an IRS-MU-MIMO system, with an increase of a user quantity and an increase of a quantity of IRS units, overhead used for channel estimation is huge. For example, in a single cell composed of M=32 antenna BSs, D=100 single-antenna users, and an IRS with N=64 reflective elements, a multi-user scheduling algorithm requires a system to estimate a channel coefficient with DMN=204800, and channel estimation overhead and delay are huge.

In addition, after the channel state information of all users is obtained, a common multi-user selection scheduling algorithm based on a criterion such as semi-orthogonality has high computational complexity. For example, in a conventional MU-MIMO with M=32 antenna base stations, and D=100 single-antenna users, computational complexity required for computing selection of orthogonal users through channel state information (channel state information, CSI) is about $1.48 \times (1 \times M) \times (M \times M) \times D \approx 5 \times 10^6$.

Application of a conventional multi-user scheduling algorithm to the IRS-MU-MIMO system brings challenges of high overhead and high computational complexity. This problem is more prominent in the face of massive user access. Considering a characteristic of an IRS channel and a challenge in the conventional technology, a feasible orthogonal user scheduling solution with low complexity needs to be considered.

An embodiment of this application provides an efficient multi-user scheduling method oriented to a massive user access scenario, in which over-the-air computation is assisted by an IRS and a base station resource is not occupied. A technical solution provided in embodiments of this application is applicable to various communication systems, for example, systems such as code division multiple access (code division multiple access, CDMA), time division multiple access (time division multiple access, TDMA), frequency division multiple access (frequency division multiple access, FDMA), orthogonal frequency-division multiple access (orthogonal frequency-division multiple access, OFDMA), single carrier FDMA (single carrier FDMA, SC-FDMA), and the like. Terms "system" and "network" may be interchanged with each other, for example, communication systems such as a 3GPP long term evolution (long term evolution, LTE) system, various versions evolved based on LTE, a 5th generation (5th Generation, 5G) communication system, and new radio (new radio, NR). In addition, the communication systems may be further used in future-oriented communication technologies, and are all used in the technical solutions provided in embodiments of this application. The system architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

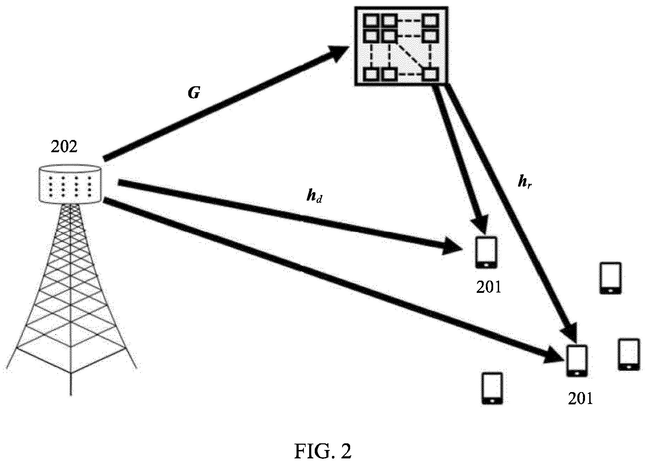

FIG. 2 is a schematic diagram of an application scenario according to an embodiment of this application. For ease of understanding, the following briefly describes the application scenario of the embodiment of this application with reference to FIG. 2. As shown in FIG. 2, the application scenario includes a terminal device 201, an access network device 202, and an IRS 203. The terminal device 201 is wirelessly connected to the access network device 202, or the terminal device 201 is wirelessly connected to the access network device 202 through the IRS 203.

The terminal device 201 is also referred to as a user equipment (user equipment, UE), a mobile station (mobile station, MS), a mobile terminal (mobile terminal, MT), or the like, and is a device that provides a user with voice and/or data connectivity, or a chip disposed in the device, for example, a handheld device or an in-vehicle device having a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

The access network device 202 may be any device having a wireless transceiver function, or a chip disposed in a device having a wireless transceiver function. The access network device 202 includes but is not limited to a base station (for example, a base station BS, a base station NodeB, an evolved NodeB eNodeB or eNB, a base station gNodeB or gNB in a 5th generation 5G communication system, a base station in a future communication system, an access node in a Wi-Fi system, a wireless relay node, or a wireless backhaul node) and the like. The base station may be a macro base station, a micro base station, a picocell base station, a small cell, a relay station, or the like. A plurality of base stations may support a network using the foregoing one or more technologies, or a future evolved network. The base station may include one or more co-sited or non-co-sited transmission reception points (transmission reception point, TRP). Alternatively, the access network device 202 may be a radio controller, a central unit (central unit, CU), a distributed unit (distributed unit, DU), or the like in a cloud radio access network (cloud radio access network, CRAN) scenario. The following uses an example in which the access network device 202 is the base station for description. The plurality of access network devices 202 may be base stations of a same type, or may be base stations of different types. The base station may communicate with the terminal device 201, or may communicate with the terminal device 201 through a relay station. The terminal device 201 may support communication with a plurality of base stations in different technologies. For example, the terminal device 201 may support communication with a base station supporting an LTE network, may support communication with a base station supporting a 5G network, or may support dual connectivity to a base station in an LTE network and a base station in a 5G network. For example, the terminal device 201 accesses a RAN node in a wireless network. Currently, for example, some RAN nodes may be a gNB, a TRP, an evolved NodeB (evolved NodeB, eNB), a next generation evolved NodeB (next generation evolved NodeB, LTE ng-eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a Wi-Fi access point (access point, AP), or the like.

A description of the IRS 203 is similar to the foregoing description corresponding to FIG. 1, and details are not described herein again. It may be understood that the IRS applied in this embodiment of this application is a passively transmitted large-scale intelligent surface, and does not have a capability for processing a baseband signal, but has a corresponding signaling receiver and a phase adjustment circuit control.

As shown in FIG. 2, this embodiment of this application is mainly applied to the IRS-MU-MIMO system, and an application scenario is mainly an IRS-assisted ultra-large-scale multi-user communication system. There are a large quantity of candidate users (terminal devices 201) in a cell shown in FIG. 2. In this embodiment of this application, orthogonal user scheduling may be efficiently performed in this scenario.

As shown in FIG. 2, in this embodiment of this application, orthogonality is mainly determined based on a channel $h_r$ between the IRS 203 and the terminal device 201. A direct path $h_d$ between the access network device 202 and the terminal device 201 has no special purpose in this embodiment of this application, and influence of the direct path $h_d$ may be eliminated through a specific operation. For example, the terminal device 201 receives a signal $y_1 = (h_r\Phi_1 G + h_d)x + n_1$. $G$ represents a channel between the access network device 202 and the IRS 203, $\Phi_1$ represents an IRS reflection coefficient matrix, $x$ represents a sending symbol of the access network device 202, and $n_1$ represents noise received by the terminal device 201. In channel coherence time, the IRS reflection coefficient matrix is changed to $\Phi_2$, the access network device 202 sends a same symbol to the terminal device 201 through a same channel, and a signal received by the terminal device 201 may be represented as $y_2 = (h_r\Phi_2 G + h_d)x + n_2$. The terminal device 201 subtracts two received signals to eliminate influence of the direct path component $h_d$, that is, $y_2 - y_1 = h_r(\Phi_2 - \Phi_1)Gx + (n_2 - n_1)$. It can be learned from the foregoing analysis that influence of the direct path component $h_d$ on channel orthogonality assessment may be eliminated. Therefore, to simplify problem description in the following in this embodiment of this application, only a reflection path $h_r$ that passes through the IRS 203 is considered, and the influence of the direct path $h_d$ is not considered.

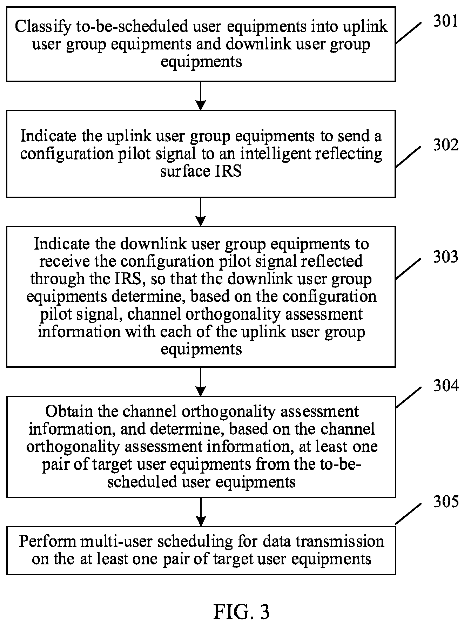

FIG. 3 is a flowchart of a user scheduling method according to an embodiment of this application. The procedure may be performed by an access network device 202 (a gNB is used as an example for description in this embodiment of this application). The procedure includes the following steps.

301: Classify to-be-scheduled user equipments into uplink user group equipments and downlink user group equipments.

In this embodiment of this application, the gNB may classify, based on an actual requirement, the to-be-scheduled user equipments into the uplink user group equipments and the downlink user group equipments in an appropriate manner, for example, through random grouping. This is not limited in this embodiment of this application. A preferred grouping manner provided in this embodiment of this application is performing grouping based on strength of a reflection link. Details are as follows.

First, the gNB sends downlink configuration signaling to an IRS signaling receiver, to enable all N units of an IRS and configure an initial reflection phase $\Phi_0$ of the IRS.

Then, the gNB transmits an SSB/CSI-RS reference signal towards the IRS through a fixed beam.

Then, the to-be-scheduled user equipment receives the SSB/CSI-RS reference signal towards the IRS, measures received signal strength, and feeds back a measurement result to the gNB. It may be understood that the received signal strength herein may also be strength of a reflection link of a reference signal from the gNB to the IRS and then to the received to-be-scheduled user equipment.

After receiving the measurement result, the gNB may perform asynchronous duplex user group division. Details are as follows.

The gNB sorts the to-be-scheduled user equipments based on a proportional fairness criterion. First, for a to-be-scheduled user equipment d, the gNB calculates an indicator $\delta_d$ based on the proportional fairness criterion and a reflection link strength of the to-be-scheduled user equipment d:

$$\delta_d = \frac{r_d}{\tau_d}.$$

$r_d$ represents the received signal strength of the to-be-scheduled user equipment, and $\tau_d$ represents a cumulative quantity of invocation times of the to-be-scheduled user equipment.

The gNB may sort users based on values of indicators (which may be sorted in descending order or in ascending order), and a set of sorted to-be-scheduled user equipments is D.

The gNB allocates uplink and downlink users at intervals for the sorted user set D, to form an uplink user group U and a downlink user group V, that is:

$$U = \left\{ d_{(2m-1)} \middle| m = 1, 2, ..., L_1 \right\},$$

and

$$V = \left\{ d_{(2m)} \middle| m = 1, 2, ..., L_2 \right\}.$$

A to-be-scheduled user equipment in the uplink user group U may also be referred to as an uplink user group equipment. A to-be-scheduled user equipment in the downlink user group V may also be referred to as a downlink user group equipment. Quantities $L_1$ and $L_2$ of to-be-scheduled user equipments in user groups (namely, the uplink user group U and the downlink user group V) are limited by a resource such as a configurable subcarrier.

In the foregoing example, the to-be-scheduled user equipments are grouped according to parity of sequence numbers of to-be-scheduled user equipments. In actual application, the to-be-scheduled user equipments may be grouped according to another preset rule. This is not limited in this embodiment of this application.

In this embodiment of this application, the gNB may perform asynchronous duplex user group division on user equipments, to classify the user equipments into an uplink user group and a downlink user group. In this embodiment of this application, the user equipments are first sorted based on reflection link strength of the user equipments and the proportional fairness criterion, and user group division is performed on sorted user equipment sets. Orthogonality between user equipment channels of different user groups may be determined through IRS-assisted over-the-air computation.

In some embodiments, after step 301 and before step 302, the gNB further configures signaling for the to-be-scheduled user equipments and the IRS. The details are as follows.

1. The gNB configures signaling for the to-be-scheduled user equipments: If the gNB supports a full-duplex mode, the gNB respectively sends configuration signaling, pilot pattern time-frequency configuration signaling, transmission slot, and measurement feedback uplink slot configuration signaling of uplink communication and downlink communication to user equipments in the uplink user group U and the downlink user group V. If the gNB does not support the full-duplex mode, the gNB additionally configures a slot for a user in the uplink user group for uplink sending.

2. The gNB configures signaling for the IRS: The gNB sends downlink configuration information to the IRS signaling receiver, to enable all N units of the IRS and configure a phase $\Phi_1$. $\Phi_1$ is a predefined phase control matrix. For example, $\Phi_1$ is a unit matrix or a diagonal matrix with a same diagonal element, and is used to support over-the-air computation of a channel between user equipments.

In this embodiment of this application, the transmission slot and the measurement feedback uplink slot configuration signaling can ensure that the user equipment in the downlink user group V immediately performs feedback and reporting after completing orthogonality measurement, to reduce a waiting time and a delay.

In addition, in addition to the to-be-scheduled user equipment, a user equipment that is communicating with the gNB may further exist in a cell. For the user equipment that is communicating with the gNB, the gNB directly classifies the user equipment to a scheduled user set, to ensure that a communication status of the user equipment is not interrupted. In addition, for the uplink communication user equipment, the gNB notifies a communication frequency band of the uplink communication user equipment to the user equipment in the downlink user group V, and appropriately increases a quantity $L_2$ of users in the downlink user group V. The user equipment in the downlink user group V receives information about the user equipment through the IRS, to directly implement over-the-air computation of channel orthogonality. For the downlink communication user equipment, a communication frequency band of the user equipment in the uplink user group U is notified through the gNB, and the over-the-air computation of the channel orthogonality with a user in the uplink user group may also be directly implemented during communication.

302: Indicate the uplink user group equipments to send a configuration pilot signal to an intelligent reflecting surface IRS.

In this embodiment of this application, the gNB may indicate all user equipments $u_i \in U, i \in \{1, 2, ..., L_1\}$ in the uplink user group U to send the configuration pilot signal to the IRS in uplink. The configuration pilot signal may be reflected by the IRS to reach the user equipment in the downlink user group V.

It may be understood that the configuration pilot signal in this embodiment of this application is a pilot signal configured by the gNB for the user equipment, and may be specifically an orthogonal pilot signal, a semi-orthogonal pilot signal, a non-orthogonal pilot signal, or the like. This is not limited in this embodiment of this application.

303: Indicate the downlink user group equipments to receive the configuration pilot signal reflected through the IRS, so that the downlink user group equipments determine, based on the configuration pilot signal, channel orthogonality assessment information with each of the uplink user group equipments.

In this embodiment of this application, the gNB may indicate all user equipments $v_j \in V, j \in \{1, 2, ..., L_2\}$ in the downlink user group V to receive, towards the IRS, the configuration pilot signal sent by the uplink user group equipment, to implement over-the-air computation of channel orthogonality between users. For example, the uplink user group U includes five user equipments $u_1, u_2, u_3, u_4, u_5$. The five user equipments respectively send configuration pilot signals on five subcarrier bands. All user equipments in the downlink user group V receive configuration pilot signals on all frequency bands from five uplink users.

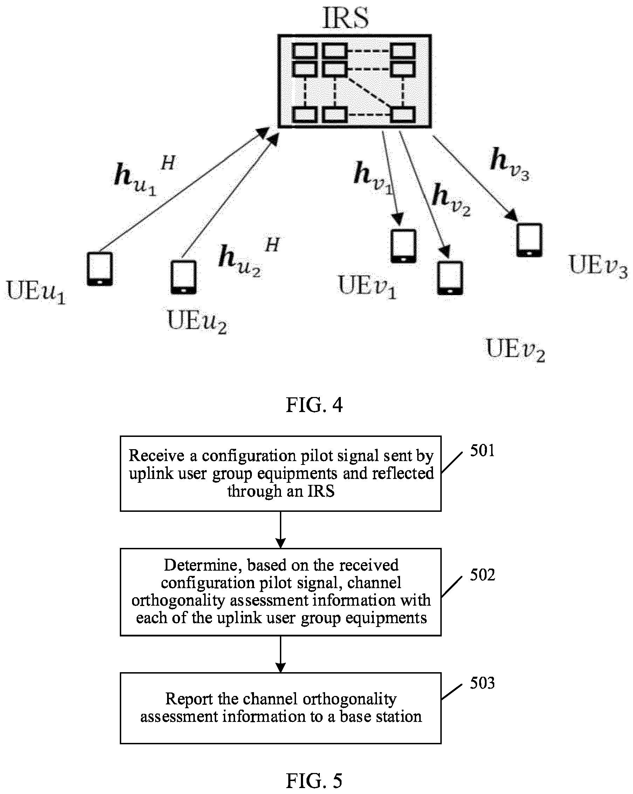

FIG. 4 is a schematic diagram of over-the-air computation of channel orthogonality according to an embodiment of this application. As shown in FIG. 4, a user equipment $u_1$ in an uplink user group U sends a configuration pilot signal towards an IRS through a channel $h_{u_1}^H$, and a user equipment $u_2$ sends a configuration pilot signal towards the IRS through a channel $h_{u_2}^H$. The IRS reflects these configuration pilot signals, so that user equipments in a downlink user group V receives the configuration pilot signals. Specifically, a user equipment $v_1$ in the downlink user group V receives a configuration pilot signal towards the IRS through a channel $h_{v_1}$, a user equipment $v_2$ receives a configuration pilot signal towards the IRS through a channel $h_{v_2}$, and a user equipment $v_3$ receives a configuration pilot signal towards the IRS through a channel $h_{v_3}$.

In this embodiment of this application, after receiving the configuration pilot signals, the user equipments in the downlink user group V may determine channel orthogonality assessment information with each uplink user group equipment based on the configuration pilot signals. The channel orthogonality assessment information is a parameter used for assessing channel orthogonality, and may be specifically a channel orthogonality assessment value. For example, a configuration pilot signal sent by an uplink user group equipment $u_i$ and received by a user equipment $v_j$ in the downlink user group V towards the IRS is:

$$y_{i,j} = h_{v_j} \Phi_1 h_{u_i}^H x + n .$$

$h_{v_j}$ is a channel used by the user equipment $v_j$ to receive the configuration pilot signal, $\Phi_1$ is a phase of the IRS, $h_{u_i}^H$ is a channel used by the uplink user group equipment $u_i$ to send the configuration pilot signal, $x$ represents a sending symbol of the gNB, and n represents noise received by the user equipment $v_j$.

It may be understood that, when $\Phi_1$ is a unit matrix or a diagonal matrix with a same diagonal element, and influence of the noise is ignored, a joint channel orthogonality assessment value may be obtained as:

$$g_{i,j} = \left| h_{v_j} h_{u_i}^H \right| .$$

$g_{i,j}$ is a channel orthogonality assessment value between the user equipment $v_j$ and the uplink user group equipment $u_i$. One user equipment $v_j$ may receive configuration pilot signals sent by a plurality of uplink user group equipments $u_i$, and therefore may determine a plurality of channel orthogonality assessment values.

The foregoing manner for calculating the channel orthogonality assessment value is merely an implementation in this embodiment of this application. In actual application, another parameter that can be used to assess channel orthogonality may be set based on an actual requirement. This is not limited in this embodiment of this application.

In this embodiment of this application, channel orthogonality measurement is implemented by IRS-assisted over-the-air computation. A user equipment in an uplink user group transmits a configuration pilot signal towards an IRS, and a user equipment in a downlink user group receives the configuration pilot signal towards the IRS. Channel orthogonality assessment values with all uplink users may be obtained based on received signal strength.

In some embodiments, after determining the channel orthogonality assessment value, the user equipment in the downlink user group V may further perform normalization processing on all the channel orthogonality assessment values, to construct a channel orthogonality assessment vector.

$$\hat{g}_j = [\hat{g}_{1,j}, \hat{g}_{2,j}, \hat{g}_{3,j}, ..., \hat{g}_{I,j}] .$$

$\hat{g}_j$ is the channel orthogonality assessment vector, $\hat{g}_{1,j}$ is a normalized channel orthogonality assessment value between a downlink user group equipment $v_j$ and a first uplink user group equipment, $\hat{g}_{2,j}$ is a normalized channel orthogonality assessment value between the downlink user group equipment $v_j$ and a second uplink user group

equipment, $\hat{g}_{3,j}$ is a normalized channel orthogonality assessment value between the downlink user group equipment $v_j$ and a third uplink user group equipment, and $\hat{g}_{I,j}$ is a normalized channel orthogonality assessment value between the downlink user group equipment $v_j$ and an I$^{th}$ uplink user group equipment.

In some embodiments, the user equipment in the downlink user group V may feed back only the channel orthogonality assessment values, and the gNB performs normalization processing on channel orthogonality assessment values after receiving the channel orthogonality assessment values. An executive body for performing normalization processing is not limited in this embodiment of this application.

After determining the channel orthogonality assessment vector or the channel orthogonality assessment value, the user equipment in the downlink user group V may report the channel orthogonality assessment vector or the channel orthogonality assessment value to the gNB. A transmission slot and measurement feedback uplink slot configuration signaling may ensure that the user equipment in the downlink user group V immediately feeds back and reports the channel orthogonality assessment vector or the channel orthogonality assessment value after determining the channel orthogonality assessment vector or the channel orthogonality assessment value, to reduce a waiting time and a delay.

A process in which the user equipment in the downlink user group V determines the channel orthogonality assessment vector or the channel orthogonality assessment value may be implemented through over-the-air computation. The over-the-air computation provides an architecture that integrates communication and computation. A process of the over-the-air computation is as follows: Through concurrent transmission of all nodes, direct calculation of a target function in an air interface channel can be implemented by using a superposition feature of a radio channel.

304: Obtain the channel orthogonality assessment information, and determine, based on the channel orthogonality assessment information, at least one pair of target user equipments from the to-be-scheduled user equipments.

In this embodiment of this application, after obtaining the channel orthogonality assessment information (the channel orthogonality assessment vector or the channel orthogonality assessment value) reported by the user equipment in the downlink user group V, the gNB may determine, based on the channel orthogonality assessment information, the at least one pair of target user equipments from the to-be-scheduled user equipments. Specifically, the gNB may select, from the to-be-scheduled user equipments, first K pairs of target user equipments with minimum channel orthogonality assessment values, where K is an integer greater than or equal to 1, and user equipments between the target user equipments are not repeated. That user equipments between the target user equipments are not repeated means that if a pair of target user equipments is {$v_1$, $u_1$}, $v_1$ and $u_1$ do not appear in another pair of target user equipment, that is, are not repeated. In actual application, the following process may be used for implementation.

3041: The gNB selects a pair of target user equipments with a minimum channel orthogonality assessment value from the to-be-scheduled user equipments.

In this embodiment of this application, the gNB may establish an inter-user channel orthogonality assessment table based on a received channel orthogonality assessment vector or a received channel orthogonality assessment value. Table 1 is an example of the inter-user channel orthogonality assessment table.

**Table 1**

|  | $u_1$ | $u_2$ | … | $u_{L_1}$ |
|---|---|---|---|---|
| $v_1$ | $g_{1,1}$ | $g_{2,1}$ | … | $g_{L_1,1}$ |
| $v_2$ | $g_{1,2}$ | $g_{2,2}$ | … | $g_{L_1,2}$ |
| … | … | … | … | … |
| $v_{L_2}$ | $g_{1,L_2}$ | $g_{2,L_2}$ | … | $g_{L_1,L_2}$ |

The gNB selects, based on Table 1, a pair of target user equipments with strong channel orthogonality, that is, a minimum orthogonality assessment value $g_{i,j}$.

3042: The gNB deletes or shields a channel orthogonality assessment value corresponding to two user equipments of the target user equipments.

In actual application, the gNB may delete or shield related rows and columns in Table 1. For example, if a pair of target user equipments selected in step 3401 are $v_1$ and $u_1$, the gNB may delete or shield a row corresponding to $v_1$ and a column corresponding to $u_1$ in Table 1, to update the inter-user channel orthogonality assessment table (for example, Table 1).

After the inter-user channel orthogonality assessment table is updated, the gNB may continue to find a next pair of target user equipments in a manner in step 3041, until a quantity of the target user equipments reaches a requirement.

An example of selection solution is as follows: The gNB searches Table 1 for an element $g_{i*,j*}$ with a minimum assessment value. The element meets the following conditions:

$$g_{i*,j*} \le g_{i,j}, \forall i \ne i*, j \ne j*$$ .

The gNB selects, based on a subscript of the element, a corresponding user pair $(u_{i*}, v_{j*})$ to add to a core user group (a set of the target user equipments), deletes a row and a column corresponding to $u_{i*}$ and $v_{j*}$ in Table 1, updates Table 1, and then searches for a next orthogonal user pair. The foregoing steps are repeated until k pairs of orthogonal users are selected, and k is an integer greater than or equal to 1. In this embodiment of this application, a concept of the core user group (that is, a concept of the target user equipment) is introduced. A base station constructs a channel orthogonality assessment table based on an orthogonality assessment value fed back and reported by a downlink user, and selects a plurality of user equipments with good channel orthogonality from the table to form the core user group. A user equipment in the core user group has high channel link strength and good mutual orthogonality, and may be used for subsequent scheduling.

The gNB may perform user group division in another manner, and perform channel orthogonality over-the-air computation in a new user group division. After a plurality of repetitions, a core user set with better orthogonality may be obtained by comprehensively calculating a result. Specifically, the gNB may cyclically use a user equipment in a determined core user group as a to-be-scheduled device, and perform step 301 to step 304, to continuously obtain a target user equipment with better orthogonality and higher channel link strength through screening. For example, the gNB performs step 301 to step 304 for a first time to obtain a core user set that is K pairs of target user equipments. The gNB continues to perform screening from the K pairs of target user equipments next time, and performs step 301 to step 304 again to obtain J pairs of target user equipments. J is a positive integer less than K. Through a plurality of times of screening, the gNB can not only obtain the target user equipment with better orthogonality and higher channel link strength, but also further reduce the core user set, to reduce system overhead and system computational complexity required for multi-user scheduling.

305: Perform multi-user scheduling for data transmission on the at least one pair of target user equipments.

In this embodiment of this application, the gNB may perform multi-user channel estimation on user equipments (which may also be represented as the user equipments in the core user group) in the at least one pair of target user equipments, and perform, according to a typical multi-user scheduling algorithm, multi-user selection scheduling used for data transmission.

The gNB may perform multi-user channel estimation on the user equipment in the core user group by using a classic method, and perform, according to the typical multi-user scheduling algorithm, multi-user scheduling for data transmission on the target user equipment. There are many typical multi-user scheduling algorithms. This is not limited in this embodiment of this application. An implementation provided in this embodiment of this application is as follows:

Initialization: $T_1 = \{1, 2, ..., K\}$, $p = 1$, $S_0 = \varnothing$.

Cycle: projection calculation:

$$t_k = h_k - \sum_{q=1}^{p-1} \frac{h_k t_{(q)}^H}{\|t\|^2} t_{(q)}$$ .

User selection:

$$\pi(p) = \arg\max_{k \in T_p} \|t_k\|, S_0 \leftarrow S_0 \cup \{\pi(p)\}, t_{(p)} = t_{\pi(p)}$$ .

Set update:

$$T_{p+1} = \left\{ k \in T_p, k \ne \pi(p) \frac{\left| h_k t_{(p)}^H \right|}{\|h_k\| \|t_{(p)}\|} < \alpha \right\}, p \to p+1$$ .

Until $S_0 = U$, and scheduling of U orthogonal users is completed.

$h_k$ is an IRS-user channel of a $k^{th}$ user, $\alpha$ is an indicator for measuring strength of user channel orthogonality, and $S_0$ is a set of scheduled orthogonal users.

FIG. 5 is a flowchart performed by a downlink user group equipment according to an embodiment of this application. Steps performed by the downlink user group equipment (a user equipment in a downlink user group V) include: 501: Receive a configuration pilot signal sent by uplink user group equipments and reflected through an IRS.

A description of step 501 is similar to the foregoing description corresponding to FIG. 4, and details are not described herein again.

502: Determine, based on the received configuration pilot signal, channel orthogonality assessment information with each of the uplink user group equipments.

Step 502 is similar to a procedure executed by the user equipment in the downlink user group V in step 303 in the foregoing embodiments corresponding to FIG. 3, and details are not described herein again.

503: Report the channel orthogonality assessment information to a base station.

In this embodiment of this application, the downlink user group equipment determines the channel orthogonality assessment information, and may report the channel orthogonality assessment information to the base station (gNB), so that the base station receives (obtains) the channel orthogonality assessment information.

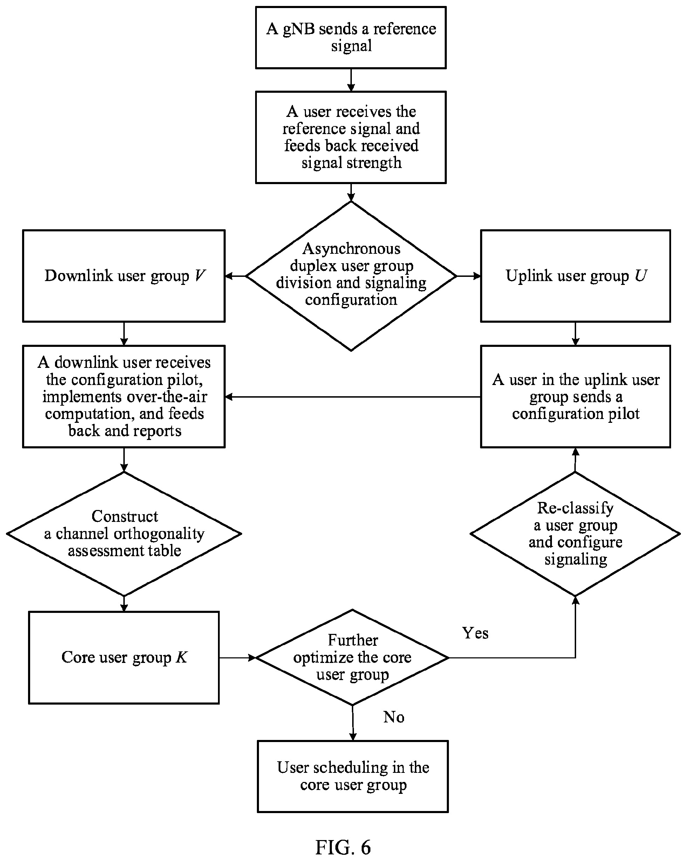

FIG. 6 is a schematic diagram of a detailed technical solution according to an embodiment of this application. In the technical solution, a gNB first sends a fixed-direction beam with an SSB/CSI-RS reference signal, so that to-be-scheduled user equipments receive the reference signal, and measure and feed back received signal strength corresponding to the reference signal. Then, the gNB classifies an asynchronous duplex user group based on the received signal strength fed back by the to-be-scheduled user equipments, and performs signaling configuration for the to-be-scheduled user equipments and an IRS. This process is similar to step 301 in the foregoing embodiments corresponding to FIG. 3, and details are not described herein again.

The grouped to-be-scheduled user equipments are classified into two groups: a downlink user group V and an uplink user group U. A user equipment in the uplink user group U sends a configuration pilot signal to a user equipment in the downlink user group V. After receiving the configuration pilot signal, the user equipment in the downlink user group V may implement over-the-air computation, and feed back a result of the over-the-air computation to the gNB. This process is similar to step 302 and step 303 in the foregoing embodiments corresponding to FIG. 3, and details are not described herein again.

After the gNB receives the result of the over-the-air computation fed back by the user equipment in the downlink user group V, the gNB may construct a channel orthogonality assessment table, then select, based on the channel orthogonality assessment table, a target user equipment with better orthogonality and higher channel link strength from the to-be-scheduled user equipments, and classify the target user equipment into a core user group K. This process is similar to step 304 in the foregoing embodiments corresponding to FIG. 3, and details are not described herein again.

In some cases, if the core user group K needs to be further optimized, the gNB may re-use user equipments in the core user group K as the to-be-scheduled user equipments, re-classify the to-be-scheduled user equipments in a similar manner, and re-perform processing such as channel orthogonality assessment, to further select the target user equipments with better orthogonality and higher channel link strength from the core user group K, and further optimize the core user group K. A quantity of times of optimization may be set based on an actual situation. This is not limited in this embodiment of this application.

After determining the core user group K, the gNB may perform user scheduling based on the core user group K. The scheduling manner is similar to step 305 in the foregoing embodiments corresponding to FIG. 3, and details are not described herein again.

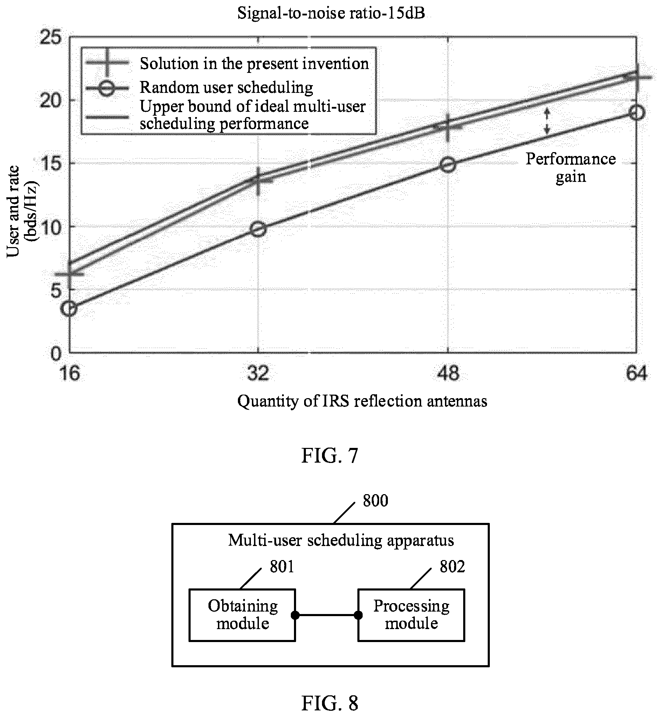

In this embodiment of this application, a technical effect is verified through a simulation instance. Specifically, simulation parameters are set as follows: A gNB antenna unit is configured with M=64, there are D=100 single-antenna users in a cell, a preset maximum quantity of uplink/downlink user groups is $L_1 + L_2$ =50, a quantity of users in the core user group is K=30, a quantity of scheduled users is U=12, and simulation channels are all flat Rayleigh fading channels. FIG. 7 is a diagram of performance gain of a simulation test according to an embodiment of this application. In this simulation test, U users are directly and randomly selected from all to-be-accessed users to access. In an "upper bound of ideal multi-user scheduling performance" solution, it is assumed that all D pieces of user channel state information are completely known, and user scheduling is performed based on a semi-orthogonal criterion. It can be learned that the user scheduling solution in this embodiment of this application has a great performance gain compared with random user scheduling, and is close to an upper bound of multi-user scheduling performance in an ideal case.

In this embodiment of this application, pilot overhead and computational complexity are effectively reduced through over-the-air computation. For example, a quantity N of IRS reflection antennas is 64. The following compares pilot overhead and computational complexity in a conventional manner with those in this embodiment of this application.

Channel estimation overhead comparison: In a conventional multi-user scheduling algorithm, channel state information of all D users needs to be known, and a channel coefficient D×M×N=409600 needs to be estimated. In the present invention, channel estimation needs to be performed only on a user in a core user group, and a channel coefficient K×M×N=122880 needs to be estimated.

Computational complexity comparison: In the conventional multi-user scheduling algorithm, user scheduling is performed directly from D users based on a semi-orthogonal criterion, and computational complexity is $1.48\times (1\times N) \times (N\times N) \times D \approx 3.9 \times 107$. In the present invention, orthogonal scheduling needs to be performed only on the user in the core user group, and computational complexity is $1.48\times (1\times N) \times (N\times N) \times K \approx 1.2 \times 107$.

It can be learned from the comparison of the performance gain, the channel estimation overhead, and the computational complexity that, in this embodiment of the present invention, a performance gain equivalent to that of the conventional algorithm can be obtained on the premise that the channel estimation overhead and the computational complexity are only 30% of those of the conventional scheduling algorithm.

In this embodiment of this application, an IRS is used to assist in over-the-air computation of channel orthogonality, and a core user group is constructed through an orthogonality measurement result. Finally, multi-user channel estimation only needs to be performed on a user in a core user group K by using a classic method, and user selection scheduling is performed based on a user channel semi-orthogonal criterion, to greatly reduce the channel estimation overhead and the computational complexity.

In a massive MIMO system, the following beneficial effects can be obtained by using the technical solutions provided in embodiments of this application:

(1) Low system pilot overhead: In the new solution, a pilot resource is allocated and detected only for a pre-selected user, to effectively avoid transmission efficiency decrease caused by pilot resource competition, uplink pilot signal pollution, and excessive pilot resource overhead caused by pilot resource allocation to all users, effectively avoid detecting full channel information of more users, and reduce processing complexity of a base station.

In addition, in this solution, transmission and measurement steps designed to be performed by a user may be completed in a given slot or a given space of the base station, for example, in another manner such as selecting an existing uplink user to search for a candidate user.

(2) High efficiency of multi-user scheduling in a system: In the new solution, multi-user selection is performed only on a pre-selected user set, to greatly reduce computational complexity and storage complexity of a system scheduling algorithm, and effectively avoid multi-user selection on an all-user set.

In this embodiment of this application, over-the-air computation of channel orthogonality measurement is implemented through IRS-assisted inter-user communication. User group division may be performed in different manners, and channel orthogonality over-the-air computation may be performed in a new user group division. After a plurality of repetitions, a core user set with better orthogonality may be obtained by comprehensively calculating a result. A larger quantity of repetitions indicates better orthogonality between users in an obtained user set, but complexity and delay increase accordingly. There is a trade-off between performance and the delay and the complexity.

FIG. 8 is a schematic diagram of a multi-user scheduling apparatus according to an embodiment of this application. The multi-user scheduling apparatus 800 includes:

an obtaining module 801, configured to perform step 304 in the foregoing embodiments corresponding to FIG. 3; and a processing module 802, configured to perform step 301, step 302, step 303, and step 305 in the foregoing embodiments corresponding to FIG. 3.

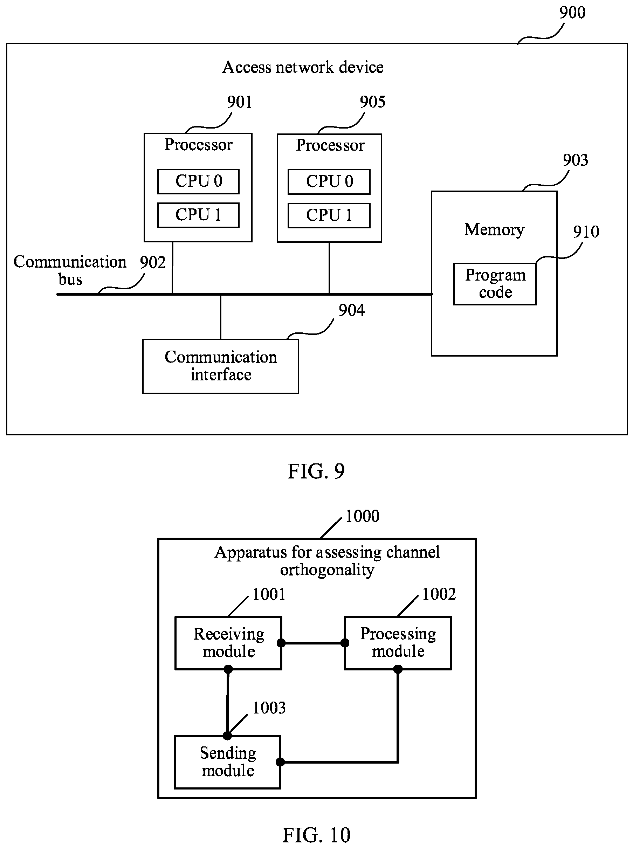

FIG. 9 is a schematic diagram of an access network device according to an embodiment of this application. The access network device 900 includes one or more processors 901, a memory 903, and a communication interface 904. The processor 901, the memory 903, and the communication interface 904 may be connected through a communication bus 902. The memory 903 is configured to store one or more programs. The one or more processors 901 are configured to run the one or more programs, to enable the access network device 900 to perform methods corresponding to the foregoing method embodiments. That is, the access network device 900 may be the access network device 202 in the embodiment shown in FIG. 2.

The processor 901 may be a general-purpose central processing unit (central processing unit, CPU), a network processor (network processor, NP), a microprocessor, or may be one or more integrated circuits configured to implement solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication bus 902 is configured to transfer information between the foregoing components. The communication bus 902 may be classified into an address bus, a data bus, a control bus, and the like. For ease of description, the bus in FIG. 9 is represented only by one bold line, but this does not indicate that there is only one bus or one type of bus.

The memory 903 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. This is not limited thereto. The memory 903 may exist independently, and is connected to the processor 901 through the communication bus 902. Alternatively, the memory 903 and the processor 901 may be integrated together.

The communication interface 904 uses any apparatus such as a transceiver, and is configured to communicate with another device or a communication network. The communication interface 904 includes a wired communication interface, and may include a wireless communication interface. The wired communication interface may be, for example, an Ethernet interface. The Ethernet interface may be an optical interface, an electrical interface, or a combination thereof. The wireless communication interface may be, for example, a wireless local area network (wireless local area network, WLAN) interface, a cellular network communication interface, or a combination thereof.

In a specific implementation, in an embodiment, the processor 901 may include one or more CPUs, for example, a CPU0 and a CPU1 shown in FIG. 9.

In a specific implementation, in an embodiment, the access network device 900 may include a plurality of processors, for example, a processor 901 and a processor 905 shown in FIG. 9. Each of the processors may be a single-core processor (single-CPU) or a multi-core processor (multi-CPU). The processor herein may be one or more devices, circuits, and/or processing cores configured to process data (for example, computer program instructions).

In a specific implementation, in an embodiment, the access network device 900 may further include an output device and an input device. The output device communicates with the processor 901, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 901, and may receive an input from a user in a plurality of manners. For example, the input device may be a mouse, a keyboard, a touchscreen device, or a sensing device.

In some embodiments, the memory 903 is configured to store program code 910 for executing the solutions of this application, and the processor 901 may execute the program code 910 stored in the memory 903. That is, the access network device 900 may implement, through the processor 901 and the program code 910 in the memory 903, the user scheduling method provided in the method embodiment.

It should be understood that the access network device 900 corresponds to the access network device in the foregoing method embodiment. Specifically, units and the foregoing other operations and/or functions in the access network device 900 are respectively used to implement the steps and methods implemented by the gNB in the method shown in FIG. 3. For specific details, refer to the foregoing method embodiment. For brevity, details are not described herein again.

FIG. 10 is a schematic diagram of an apparatus for assessing channel orthogonality according to an embodiment of this application. The apparatus 1000 includes:

a receiving module 1001, configured to perform step 501 in the embodiment corresponding to FIG. 5;
a processing module 1002, configured to perform step 502 in the embodiment corresponding to FIG. 5; and
a sending module 1003, configured to perform step 503 in the embodiment corresponding to FIG. 5.

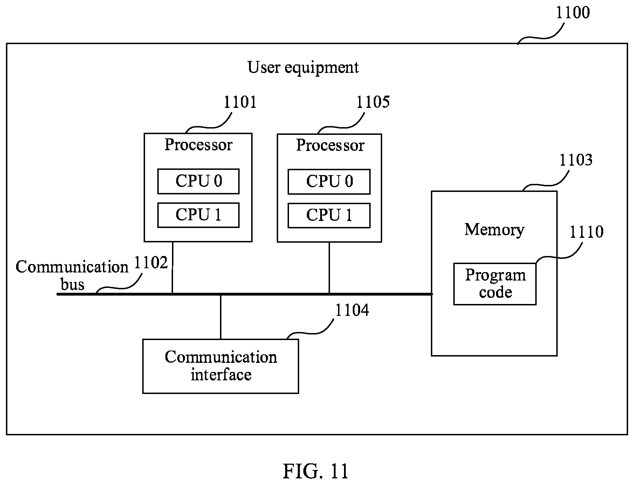

FIG. 11 is a schematic diagram of a user equipment according to an embodiment of this application. In a user equipment 1100, for a processor 1101, a communication bus 1102, a memory 1103, a communication interface 1104, a processor 1105, and program code 1110, refer to the foregoing embodiments corresponding to FIG. 9. Details are not described again in this embodiment of this application. The user equipment 1100 may be the terminal device 201 in the embodiment shown in FIG. 2.

It should be understood that the user equipment 1100 corresponds to the user equipment in the foregoing method embodiment. Specifically, units and the foregoing other operations and/or functions in the user equipment 1100 are respectively used to implement the steps and methods implemented by the downlink user group equipment in the method shown in FIG. 5. For specific details, refer to the foregoing method embodiment. For brevity, details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A multi-user scheduling method performed by a base station, comprising:

    classifying (301) to-be-scheduled user equipments into uplink user group equipments ($UEu_1$, $UEu_2$) and downlink user group equipments ($UEv_1$, $UEv_2$, $UEv_3$);
    indicating (302) the uplink user group equipments to send a configuration pilot signal to an intelligent reflecting surface, IRS, (203);
    indicating (303) the downlink user group equipments to receive the configuration pilot signal reflected through the IRS (203), so that the downlink user group equipments determine, based on the configuration pilot signal, channel orthogonality assessment information with each of the uplink user group equipments;
    obtaining (304) the channel orthogonality assessment information, and determining, based on the channel orthogonality assessment information, at least one pair of target user equipments (1100) from the to-be-scheduled user equipments; and
    performing (305) multi-user scheduling for data transmission on the at least one pair of target user equipments (1100).

2. The method according to claim 1, wherein that the downlink user group equipments determine, based on the configuration pilot signal, channel orthogonality assessment information with each of the uplink user group equipments comprises:
    determining, by the downlink user group equipments based on the configuration pilot signal, a channel orthogonality assessment value with each of the uplink user group equipments.

3. The method according to claim 2, wherein after the determining, by the downlink user group equipments, a channel orthogonality assessment value with each of the uplink user group equipments, the method further comprises:
    performing, by the downlink user group equipments, normalization processing on channel orthogonality assessment values to construct a channel orthogonality assessment vector.

4. The method according to claim 2 or 3, wherein the obtaining the channel orthogonality assessment information, and determining, based on the channel orthogonality assessment information, at least one pair of target user equipments (1100) from the to-be-scheduled user equipments comprises:

obtaining the channel orthogonality assessment value fed back by each of the downlink user group equipments; and

selecting, from the to-be-scheduled user equipments, first K pairs of target user equipments (1100) with minimum channel orthogonality assessment values, wherein K is an integer greater than or equal to 1, and user equipments (1100) between the target user equipment pairs are not repeated.

5. The method according to claim 4, wherein the selecting, from the to-be-scheduled user equipments, first K pairs of target user equipments (1100) with minimum channel orthogonality assessment values comprises:

selecting, from the to-be-scheduled user equipments, an $n^{th}$ pair of target user equipments (1100) with a minimum channel orthogonality assessment value, wherein n is an integer greater than or equal to 1; deleting or shielding a channel orthogonality assessment value corresponding to two user equipments (1100) in the $n^{th}$ pair of target user equipments (1100); and
selecting, from remaining to-be-scheduled user equipments, an $(n+1)^{th}$ pair of target user equipments (1100) with a minimum channel orthogonality assessment value, wherein n+1 is less than or equal to K;
and/or wherein after the selecting, from the to-be-scheduled user equipments, first K pairs of target user equipments (1100) with minimum channel orthogonality assessment values, the method further comprises:
selecting, from the K pairs of target user equipments (1100), first J pairs of target user equipments (1100) with minimum channel orthogonality assessment values, wherein J is an integer greater than or equal to 1, and J is less than K.

6. The method according to any one of claims 1 to 5, wherein the classifying to-be-scheduled user equipments into uplink user group equipments and downlink user group equipments comprises:

sending a reference signal to the IRS (203) by using a fixed beam, so that the to-be-scheduled user equipments receive the reference signal and report received signal strength corresponding to the reference signal; obtaining the received signal strength;
sorting the to-be-scheduled user equipments based on the received signal strength and according to a rule for multi-user scheduling; and
classifying, according to parity of sequence numbers or a preset rule, sorted to-be-scheduled user equipments into uplink user group equipments and downlink user group equipments.

7. The method according to any one of claims 1 to 6, wherein after the classifying to-be-scheduled user equipments into uplink user group equipments and downlink user group equipments, and before the indicating the uplink user group equipments to send a configuration pilot signal to an intelligent reflecting surface IRS (203), the method further comprises:

respectively sending configuration signaling required for uplink communication or downlink communication to the uplink user group equipments and the downlink user group equipments, wherein the configuration signaling comprises user time-frequency resource configuration information, reference signal configuration information, and user feedback configuration information; and
sending phase configuration signaling required for over-the-air computation to the IRS (203), wherein the phase configuration signaling indicates a phase configuration of an IRS array.

8. A base station, comprising a control apparatus, wherein the control apparatus communicates with another part of the base station through a communication bus (902, 1102);

the control apparatus comprises a memory (903, 1103), a processor (901, 905, 1101, 1105), and a communication link;
the memory (903, 1103) is configured to store instructions;
the processor communicates with the memory (903, 1103) through the communication link; and
after the processor (901, 905, 1101, 1105) executes some instructions stored in the memory (903, 1103), the control apparatus enables the base station to implement the user scheduling method according to any one of claims 1 to 7.

9. A computer-readable storage medium, comprising instructions, wherein when the instructions are run on a computer or a processor (901, 905, 1101, 1105), the computer or the processor (901, 905, 1101, 1105) is configured to perform the method according to any one of claims 1 to 7.

10. A computer program product comprising program instructions, wherein when the program instructions are run on a computer or a processor (901, 905, 1101, 1105), the computer or the processor (901, 905, 1101, 1105) is configured to perform the method according to any one of claims 1 to 7.


**Patentansprüche**

1. Mehrbenutzer-Planungsverfahren, das von einer Basisstation durchgeführt wird, umfassend:

   Klassifizieren (301) von zu planenden Benutzereinrichtungen in Uplink-Benutzergruppeneinrichtungen ($UE_{u1}$, $UE_{u2}$) und Downlink-Benutzergruppeneinrichtungen ($UE_{v1}$, $UE_{v2}$, $UE_{v3}$);
   Anzeigen (302) gegenüber den Uplink-Benutzergruppeneinrichtungen, ein Konfigurations-Pilotsignal an eine intelligente reflektierende Oberfläche (IRS) (203) zu senden;
   Anzeigen (303) gegenüber den Downlink-Benutzergruppeneinrichtungen, das über die IRS (203) reflektierte Konfigurations-Pilotsignal zu empfangen, sodass die Downlink-Benutzergruppeneinrichtungen basierend auf dem Konfigurations-Pilotsignal Kanalorthogonalitäts-Bewertungsinformationen mit jeder der Uplink-Benutzergruppeneinrichtungen bestimmen;
   Erhalten (304) der Kanalorthogonalitäts-Bewertungsinformationen und Bestimmen, basierend auf den Kanalorthogonalitäts-Bewertungsinformationen, mindestens eines Paars von Ziel-Benutzereinrichtungen (1100) aus den zu planenden Benutzereinrichtungen; und
   Durchführen (305) einer Mehrbenutzer-Planung zur Datenübertragung für das mindestens eine Paar von Ziel-Benutzereinrichtungen (1100).

2. Verfahren nach Anspruch 1, wobei das Bestimmen von Kanalorthogonalitäts-Bewertungsinformationen mit jeder der Uplink-Benutzergruppeneinrichtungen durch die Downlink-Benutzergruppeneinrichtungen basierend auf dem Konfigurations-Pilotsignal Folgendes umfasst:
   Bestimmen, durch die Downlink-Benutzergruppeneinrichtungen basierend auf dem Konfigurations-Pilotsignal, eines Kanalorthogonalitäts-Bewertungswerts mit jeder der Uplink-Benutzergruppeneinrichtungen.

3. Verfahren nach Anspruch 2, wobei das Verfahren nach dem Bestimmen, durch die Downlink-Benutzergruppeneinrichtungen, eines Kanalorthogonalitäts-Bewertungswerts mit jeder der Uplink-Benutzergruppeneinrichtungen ferner Folgendes umfasst:
   Durchführen, durch die Downlink-Benutzergruppeneinrichtungen, einer Normalisierungsverarbeitung an Kanalorthogonalitäts-Bewertungswerten, um einen Kanalorthogonalitäts-Bewertungsvektor zu konstruieren.

4. Verfahren nach Anspruch 2 oder 3, wobei das Empfangen der Kanalorthogonalitäts-Bewertungsinformationen und das Bestimmen, basierend auf den Kanalorthogonalitäts-Bewertungsinformationen, mindestens eines Paars von Ziel-Benutzereinrichtungen (1100) aus den zu planenden Benutzereinrichtungen Folgendes umfasst:

   Erhalten des von jeder der Downlink-Benutzergruppeneinrichtungen zurückgemeldeten Kanalorthogonalitäts-Bewertungswerts; und
   Auswählen, aus den zu planenden Benutzereinrichtungen, erster K Paare von Ziel-Benutzereinrichtungen (1100) mit minimalen Kanalorthogonalitäts-Bewertungswerten, wobei K eine ganze Zahl größer oder gleich 1 ist und sich Benutzereinrichtungen (1100) zwischen den Ziel-Benutzereinrichtungspaaren nicht wiederholen.

5. Verfahren nach Anspruch 4, wobei das Auswählen, aus den zu planenden Benutzereinrichtungen, erster K Paare von Ziel-Benutzereinrichtungen (1100) mit minimalen Kanalorthogonalitäts-Bewertungswerten Folgendes umfasst:

   Auswählen, aus den zu planenden Benutzereinrichtungen, eines n-ten Paars von Ziel-Benutzereinrichtungen (1100) mit einem minimalen Kanalorthogonalitäts-Bewertungswert, wobei n eine ganze Zahl größer oder gleich 1 ist;
   Löschen oder Abschirmen eines Kanalorthogonalitäts-Bewertungswerts, der zwei Benutzereinrichtungen (1100) in dem n-ten Paar von Ziel-Benutzereinrichtungen (1100) entspricht; und
   Auswählen, aus verbleibenden zu planenden Benutzereinrichtungen, eines (n+1)-ten Paars von Ziel-Benutzereinrichtungen (1100) mit einem minimalen Kanalorthogonalitäts-Bewertungswert, wobei n+1 kleiner als oder gleich K ist;

und/oder wobei das Verfahren nach dem Auswählen, aus den zu planenden Benutzereinrichtungen, erster K Paare von Ziel-Benutzereinrichtungen (1100) mit minimalen Kanalorthogonalitäts-Bewertungswerten ferner Folgendes umfasst:

Auswählen, aus den K Paaren von Ziel-Benutzereinrichtungen (1100), erster J Paare von Ziel-Benutzereinrichtungen (1100) mit minimalen Kanalorthogonalitäts-Bewertungswerten, wobei J eine ganze Zahl größer als oder gleich 1 ist und J kleiner als K ist.

6. Verfahren nach einem der Ansprüche 1 bis 5, wobei das Klassifizieren der zu planenden Benutzereinrichtungen in Uplink-Benutzergruppeneinrichtungen und Downlink-Benutzergruppeneinrichtungen Folgendes umfasst:

Senden eines Referenzsignals an die IRS (203) unter Verwendung eines festen Strahls, sodass die zu planenden Benutzereinrichtungen das Referenzsignal empfangen und eine dem Referenzsignal entsprechende Empfangssignalstärke melden;

Erhalten der Empfangssignalstärke;

Sortieren der zu planenden Benutzereinrichtungen basierend auf der Empfangssignalstärke und gemäß einer Regel für Mehrbenutzer-Planung; und

Klassifizieren der sortierten zu planenden Benutzereinrichtungen gemäß einer Parität von Sequenznummern oder einer voreingestellten Regel in Uplink-Benutzergruppeneinrichtungen und Downlink-Benutzergruppeneinrichtungen.

7. Verfahren nach einem der Ansprüche 1 bis 6, wobei das Verfahren nach dem Klassifizieren der zu planenden Benutzereinrichtungen in Uplink-Benutzergruppeneinrichtungen und Downlink-Benutzergruppeneinrichtungen und vor dem Anzeigen gegenüber den Uplink-Benutzergruppeneinrichtungen, ein Konfigurations-Pilotsignal an eine intelligente reflektierende Oberfläche (IRS) (203) zu senden, ferner Folgendes umfasst:

jeweiliges Senden einer für die Uplink-Kommunikation oder Downlink-Kommunikation erforderlichen Konfigurationssignalisierung an die Uplink-Benutzergruppeneinrichtungen und die Downlink-Benutzergruppeneinrichtungen, wobei die Konfigurationssignalisierung Benutzer-Zeit-Frequenz-Ressourcen-Konfigurationsinformationen, Referenzsignal-Konfigurationsinformationen und Benutzer-Rückmeldungs-Konfigurationsinformationen umfasst; und

Senden einer für Over-the-Air-Berechnung erforderlichen Phasenkonfigurationssignalisierung an die IRS (203), wobei die Phasenkonfigurationssignalisierung eine Phasenkonfiguration eines IRS-Arrays anzeigt.

8. Basisstation, umfassend eine Steuervorrichtung, wobei die Steuervorrichtung über einen Kommunikationsbus (902, 1102) mit einem anderen Teil der Basisstation kommuniziert;

wobei die Steuervorrichtung einen Speicher (903, 1103), einen Prozessor (901, 905, 1101, 1105) und eine Kommunikationsverbindung umfasst;

wobei der Speicher (903, 1103) dazu konfiguriert ist, Anweisungen zu speichern;

wobei der Prozessor über die Kommunikationsverbindung mit dem Speicher (903, 1103) kommuniziert; und

wobei die Steuervorrichtung, nachdem der Prozessor (901, 905, 1101, 1105) einige im Speicher (903, 1103) gespeicherte Anweisungen ausführt, es der Basisstation ermöglicht, das Benutzereinrichtungs-Planungsverfahren nach einem der Ansprüche 1 bis 7 zu implementieren.

9. Computerlesbares Speichermedium, umfassend Anweisungen, wobei, wenn die Anweisungen auf einem Computer oder einem Prozessor (901, 905, 1101, 1105) ausgeführt werden, der Computer oder der Prozessor (901, 905, 1101, 1105) dazu konfiguriert ist, das Verfahren nach einem der Ansprüche 1 bis 7 durchzuführen.

10. Computerprogrammprodukt, umfassend Programmanweisungen, wobei, wenn die Programmanweisungen auf einem Computer oder einem Prozessor (901, 905, 1101, 1105) ausgeführt werden, der Computer oder der Prozessor (901, 905, 1101, 1105) dazu konfiguriert ist, das Verfahren nach einem der Ansprüche 1 bis 7 durchzuführen.

**Revendications**

1. Procédé de planification multi-utilisateur exécuté par une station de base, comprenant :

la classification (301) d'équipements d'utilisateurs à planifier en équipements de groupes d'utilisateurs de liaison montante (UEu1, UEu2) et équipements de groupes d'utilisateurs de liaison descendante (UEv1, UEv2, UEv3) ;

l'indication (302) aux équipements de groupes d'utilisateurs de liaison montante d'envoyer un signal pilote de configuration à une surface réfléchissante intelligente, IRS, (203) ;

l'indication (303) aux équipements de groupes d'utilisateurs de liaison descendante de recevoir le signal pilote de configuration réfléchi par l'intermédiaire de l'IRS (203), de telle sorte que les équipements de groupes d'utilisateurs de liaison descendante déterminent, d'après le signal pilote de configuration, des informations d'évaluation d'orthogonalité de canal avec chacun des équipements de groupes d'utilisateurs de liaison montante ;

l'obtention (304) des informations d'évaluation d'orthogonalité de canal, et la détermination, d'après les informations d'évaluation d'orthogonalité de canal, d'au moins une paire d'équipements d'utilisateurs cibles (1100) parmi les équipements d'utilisateurs à planifier ; et

l'exécution (305) d'une planification multi-utilisateur pour une transmission de données sur l'au moins une paire d'équipements d'utilisateurs cibles (1100).

2. Procédé selon la revendication 1, dans lequel la détermination par les équipements de groupes d'utilisateurs de liaison descendante, d'après le signal pilote de configuration, d'informations d'évaluation d'orthogonalité de canal avec chacun des équipements de groupes d'utilisateurs de liaison montante comprend :

la détermination, par les équipements de groupes d'utilisateurs de liaison descendante, d'après le signal pilote de configuration, d'une valeur d'évaluation d'orthogonalité de canal avec chacun des équipements de groupes d'utilisateurs de liaison montante.

3. Procédé selon la revendication 2, dans lequel, après la détermination, par les équipements de groupes d'utilisateurs de liaison descendante, d'une valeur d'évaluation d'orthogonalité de canal avec chacun des équipements de groupes d'utilisateurs de liaison montante, le procédé comprend en outre :

l'exécution, par les équipements de groupes d'utilisateurs de liaison descendante, d'un traitement de normalisation sur des valeurs d'évaluation d'orthogonalité de canal pour construire un vecteur d'évaluation d'orthogonalité de canal.

4. Procédé selon la revendication 2 ou 3, dans lequel l'obtention des informations d'évaluation d'orthogonalité de canal, et la détermination, d'après les informations d'évaluation d'orthogonalité de canal, d'au moins une paire d'équipements d'utilisateurs cibles (1100) parmi les équipements d'utilisateurs à planifier, comprennent :

l'obtention de la valeur d'évaluation d'orthogonalité de canal renvoyée par chacun des équipements de groupes d'utilisateurs de liaison descendante ; et

la sélection, parmi les équipements d'utilisateurs à planifier, des K premières paires d'équipements d'utilisateurs cibles (1100) ayant des valeurs d'évaluation d'orthogonalité de canal minimales, où K est un entier supérieur ou égal à 1 et les équipements d'utilisateurs (1100) entre les paires d'équipements d'utilisateurs cibles ne sont pas répétés.

5. Procédé selon la revendication 4, dans lequel la sélection, parmi les équipements d'utilisateurs à planifier, des K premières paires d'équipements d'utilisateurs cibles (1100) ayant des valeurs d'évaluation d'orthogonalité de canal minimales comprend :

la sélection, parmi les équipements d'utilisateurs à planifier, d'une n-ième paire d'équipements d'utilisateurs cibles (1100) ayant une valeur d'évaluation d'orthogonalité de canal minimale, où n est un entier supérieur ou égal à 1 ;

l'effacement ou le masquage d'une valeur d'évaluation d'orthogonalité de canal correspondant à deux équipements d'utilisateurs (1100) de la n-ième paire d'équipements d'utilisateurs cibles (1100) ; et

la sélection, parmi les équipements d'utilisateurs à planifier restants, d'une (n+1)-ième paire d'équipements d'utilisateurs cibles (1100) ayant une valeur d'évaluation d'orthogonalité de canal minimale, où n+1 est inférieur ou égal à K ;

et/ou dans lequel, après la sélection, parmi les équipements d'utilisateurs à planifier, des K premières paires d'équipements d'utilisateurs cibles (1100) ayant des valeurs d'évaluation d'orthogonalité de canal minimales, le procédé comprend en outre :

la sélection, parmi les K paires d'équipements d'utilisateurs cibles (1100), des J premières paires d'équipements d'utilisateurs cibles (1100) ayant des valeurs d'évaluation d'orthogonalité de canal minimales, où J est un entier supérieur ou égal à 1, et J est inférieur à K.

6. Procédé selon l'une quelconque des revendications 1 à 5, dans lequel la classification d'équipements d'utilisateurs à planifier en équipements de groupes d'utilisateurs de liaison montante et équipements de groupes d'utilisateurs de liaison descendante comprend :

l'envoi d'un signal de référence à l'IRS (203) au moyen d'un faisceau fixe, de telle sorte que les équipements d'utilisateurs à planifier reçoivent le signal de référence et rapportent l'intensité du signal reçu correspondant au signal de référence ;
l'obtention de l'intensité du signal reçu ;
le tri des équipements d'utilisateurs à planifier d'après l'intensité du signal reçu et selon une règle pour la planification multi-utilisateur ; et
la classification, selon une parité des numéros de séquence ou une règle prédéfinie, des équipements d'utilisateurs à planifier triés en équipements de groupes d'utilisateurs de liaison montante et équipements de groupes d'utilisateurs de liaison descendante.

7. Procédé selon l'une quelconque des revendications 1 à 6, dans lequel, après la classification des équipements d'utilisateurs à planifier en équipements de groupes d'utilisateurs de liaison montante et équipements de groupes d'utilisateurs de liaison descendante, et avant l'indication aux équipements de groupes d'utilisateurs de liaison montante d'envoyer un signal pilote de configuration à une surface réfléchissante intelligente, IRS, (203), le procédé comprend en outre :

l'envoi respectif d'une signalisation de configuration requise pour une communication de liaison montante ou une communication de liaison descendante aux équipements de groupes d'utilisateurs de liaison montante et aux équipements de groupes d'utilisateurs de liaison descendante, la signalisation de configuration comprenant des informations de configuration de ressource temps-fréquence d'utilisateur, des informations de configuration de signal de référence et des informations de configuration de retour d'information d'utilisateur ; et
l'envoi à l'IRS (203) d'une signalisation de configuration de phase requise pour un calcul sans fil, la signalisation de configuration de phase indiquant une configuration de phase d'un réseau d'IRS.

8. Station de base, comprenant un appareil de commande, l'appareil de commande communiquant avec une autre partie de la station de base via un bus de communication (902, 1102) ;

l'appareil de commande comprenant une mémoire (903, 1103), un processeur (901, 905, 1101, 1105), et une liaison de communication ;
la mémoire (903, 1103) étant configurée pour stocker des instructions ;
le processeur communiquant avec la mémoire (903, 1103) via la liaison de communication ; et
après que le processeur (901, 905, 1101, 1105) a exécuté certaines instructions stockées dans la mémoire (903, 1103), l'appareil de commande permettant à la station de base de mettre en œuvre le procédé de planification d'utilisateur selon l'une quelconque des revendications 1 à 7.

9. Support de stockage lisible par ordinateur, comprenant des instructions, lorsque les instructions sont exécutées sur un ordinateur ou un processeur (901, 905, 1101, 1105), l'ordinateur ou le processeur (901, 905, 1101, 1105) étant configuré pour exécuter le procédé selon l'une quelconque des revendications 1 à 7.

10. Produit de programme informatique, comprenant des instructions de programme, lorsque les instructions de programme sont exécutées sur un ordinateur ou un processeur (901, 905, 1101, 1105), l'ordinateur ou le processeur (901, 905, 1101, 1105) étant configuré pour exécuter le procédé selon l'une quelconque des revendications 1 à 7.

FIG. 1

FIG. 2

Classify to-be-scheduled user equipments into uplink user group equipments and downlink user group equipments / 301

Indicate the uplink user group equipments to send a configuration pilot signal to an intelligent reflecting surface IRS / 302

Indicate the downlink user group equipments to receive the configuration pilot signal reflected through the IRS, so that the downlink user group equipments determine, based on the configuration pilot signal, channel orthogonality assessment information with each of the uplink user group equipments / 303

Obtain the channel orthogonality assessment information, and determine, based on the channel orthogonality assessment information, at least one pair of target user equipments from the to-be-scheduled user equipments / 304

Perform multi-user scheduling for data transmission on the at least one pair of target user equipments / 305

FIG. 3

FIG. 4

| Receive a configuration pilot signal sent by uplink user group equipments and reflected through an IRS | 501 |

| Determine, based on the received configuration pilot signal, channel orthogonality assessment information with each of the uplink user group equipments | 502 |

| Report the channel orthogonality assessment information to a base station | 503 |

FIG. 5

FIG. 6

Signal-to-noise ratio-15dB

FIG. 7

FIG. 8

900

Access network device

901                905

Processor        Processor

CPU 0            CPU 0

CPU 1            CPU 1

903

Memory           910

Program code

Communication    902
bus

904

Communication
interface

FIG. 9

1000

Apparatus for assessing channel
orthogonality

1001                1002

Receiving          Processing
module             module

1003

Sending
module

FIG. 10

1100

User equipment

1101          1105

Processor          Processor                          1103

CPU 0          CPU 0

CPU 1          CPU 1                    Memory          1110

Communication 1102
bus                                                      Program
                                                         code

1104

Communication
interface

FIG. 11

## EP 4 231 758 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011335709
- EP 2161852 A1
- CN 106028461 A